# EUROPEAN PATENT SPECIFICATION

(11) **EP 1 852 650 B1**
(45) Date of publication and mention of the grant of the patent: **11.03.2009**
(21) Application number: 07107212.8
(22) Date of filing: 30.04.2007
(51) Int. Cl.: F21V 9/08, F21S 8/10

(54) **Lenses for vehicle indicator lamps**
Linsen für Anzeigelampen von Fahrzeugen
Lentilles pour voyant lumineux de véhicule

(30) Priority: 05.05.2006 GB 0608865
(43) Date of publication of application: 07.11.2007
(73) Proprietor: Nissan Motor Manufacturing (UK) Ltd., Cranfield, Bedfordshire MK43 0DB (GB)
(72) Inventor: Todd, Andy Nissan Motor Manufactoring (UK) Ltd, Cranfield Technology Park Moulsoe Road Cranfield Bedfordshire MK43 0DB (GB)
(74) Representative: Hufton, Victoria Alice

(56) References cited:
- EP-A1- 0 211 742
- EP-A1- 0 677 696

## Description

The invention is in the field of coloured lenses for vehicle headlamps. In particular, the invention relates to the configuration of the optics in coloured lenses of vehicle directional indicator lamps, also known as turning lamps.

In an effort to improve or customise the aesthetic appearance of motor vehicles, such as cars, it has been known to apply coloured lenses to the headlamp units. In some instances it may be desirable to apply a coloured lens to the various lamps within the forward headlamp or rearward facing lamp assemblies that either match the colour of the vehicle bodywork or even contrast with the bodywork. Previously, efforts to provide coloured lenses for headlamp units have relied primarily upon the simple colouring of the lens material, however, this can have detrimental effects upon the optical output of the headlamps. Investigations by the present inventors have indicated that simply including a blue coloured dye in the plastic lens material of a headlamp unit can reduce the light transmission of the lens by as much as 30% compared to a clear uncoloured lens. This can have a profound effect upon the visibility of a vehicle in reduced light driving conditions e.g. at nighttime or in fog.

When considering directional indicators within a headlamp unit, it is an Internationally recognised standard that such lamps should blink with an apparent yellow or amber hue. Clearly a coloured lens overlying the directional indicator bulb should not affect the operational colour of the directional indicator in use. Many countries have established road safety regulations that specify in detail the requirements for a vehicle component such as a vehicle turning indicator. In the US, Federal Motor Vehicle Safety Standard (FMVSS) 108 is a typical example of the rigorous type of regulations that exist and which headlamp units must satisfy if they are to be considered safe for road use.

Hence, there is a need for lens arrangements that allow a directional indicator lamp to appear coloured when in the inactivated state, but which do not obscure or affect the optical characteristics, including the colour, of the indicator when in the activated (blinking) state.

EP-A-0 211 742 discloses a vehicle indicator lamp comprising a source of approximately colourless light and a number of juxtaposed elementary filters each disposed in the path of a respective elementary mean to give it a respective complementary colour. The filters that have the same colour towards to exterior of the light have a total surface area which is greater than that of the other elementary filters transversely to the central direction.

According to the present invention there is provided a coloured lens for use in a vehicle directional indicator lamp, comprising a light receiving surface and an exterior surface, a plurality of lens units, each lens unit defining a portion of the light receiving surface with a convex curvature such that each lens unit defines a plano-convex lens in combination with a corresponding region of the exterior surface, a plurality of modified lens units distributed in a regular repeating pattern with the lens units; wherein one or more of the lens units is modified such that the convex curvature of the portion of the light receiving surface is greater than that of a neighbouring lens unit; and characterised in that the lens material is blue in colour and the configuration of the distribution of modified and unmodified lens units is such that every third lens unit is a modified lens unit in order to ensure that colour of the lens does not affect the optical characteristics of the lamp.

The lens units may be in the form of convex ribbed projections located on the light receiving surface of the lens. The modified lens units may be distributed in a regular repeating pattern amongst the unmodified lens units. Typically, the configuration of the distribution of modified and unmodified lens units is correlated to the light transmission characteristics, including the colour, of the lens material.

Furthermore according to the present invention there is provided a vehicle directional indicator unit comprising a lens as described above. In one embodiment of the invention the directional indicator unit is adapted for use in a forward facing indicator unit. In an alternative embodiment of the invention the directional indicator unit is adapted for use in a rearward facing indicator unit.
Figure 1 shows a cross sectional diagram of a conventional directional indicator unit installed in a headlamp assembly; the direction of the emitted light is shown as broken line arrows;
Figure 2 is a representation showing the conventional directional indicator unit as installed in a forward facing headlamp assembly on a motor vehicle, the individual lens units can be seen as ribs aligned in a substantially vertical pattern on the lens of the directional indicator;
Figure 3 is a representation of a coloured lens with the different lens units shown as vertical ribs, the darker strips indicating lens units with modified optical characteristics compared to the neighbouring lens units; and
Figure 4 is a representation along section A-A of Figure 3, showing the modified curvature of the lens units in the coloured lens of the invention.

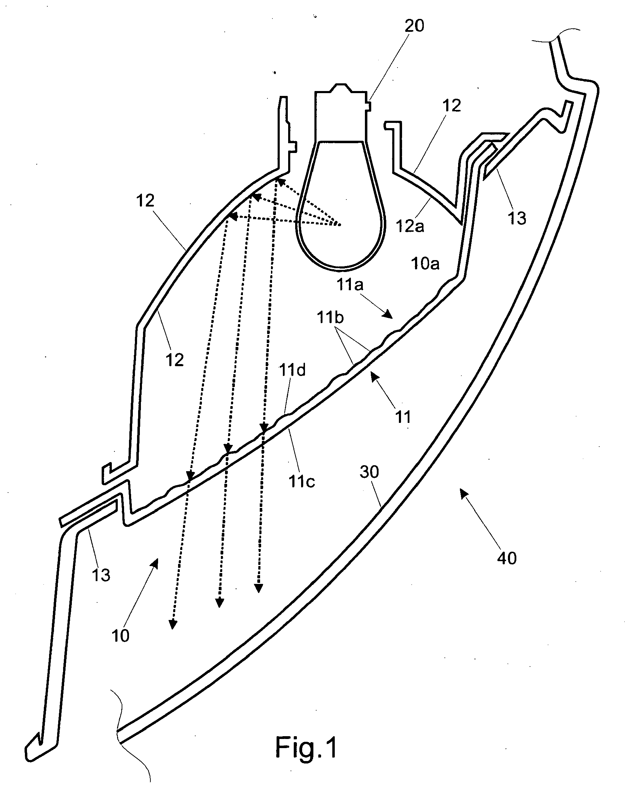

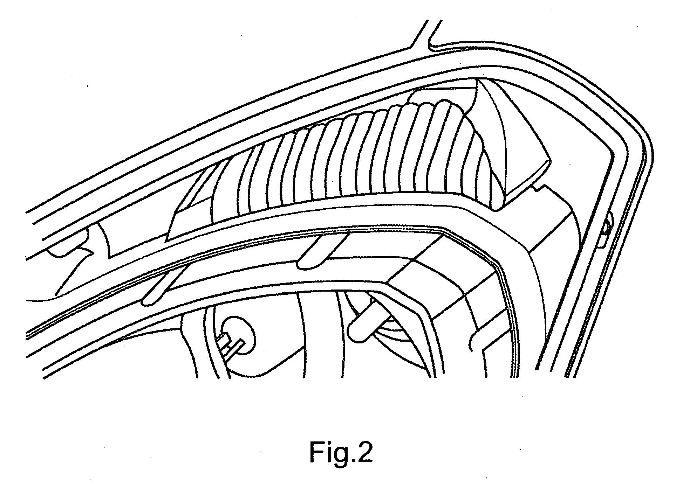

A directional indicator lamp assembly 10 is provided that is suitable for mounting within a headlamp unit 40 adapted for installation on a motor vehicle (Figure 2). The known directional indicator lamp assembly 10 shown in Figure 1, and described in more detail below, is in a configuration that is suitable for use in headlamp units that are located on the forward facing side of a vehicle, however, the invention is not limited to forward facing directional indicator lamp assemblies.

The directional indicator lamp assembly 10 is suitably mounted on bezel 13, which constitutes the rearwardmost portion of the body of the headlamp unit 40, using conventional fastening means. The headlamp unit 40 also comprises a transparent cover member 30 that constitutes the forwardmost portion of the headlamp unit. The transparent cover member 30 is typically made from a transparent material such as glass or a suitable plastics or polymeric material, and may or may not usually provide an additional lensing function.

The directional indicator lamp assembly 10 comprises a light source 20. The light source may be in the form of a bulb or LED that, in use, 'blinks' with a perceived amber or yellow colour. The light source 20, can emit white light, however this will typically first pass through an amber filter, or in the case of a bulb, the surface of the bulb may comprise a layer of amber coloured lacquer. The light source 20 is located within the interior of a chamber 10a defined by the lens 11 in combination with a light gathering reflective body 12. The lens 11 and the light gathering reflective body 12 can be connected to each other via conventional fastening means. The light gathering reflective body 12 comprises a reflective surface 12a that serves to gather and reflect light emitted in a rearward direction from the light source 20.

The lens 11 comprises an interior light receiving surface 11a that receives light emitted directly from the light source 20, or light reflected from the reflective surface 12a. The light receiving surface 11 a comprises a plurality of lens units 11 b that are arranged in the form of a ribbed array. Each lens unit 11 b effectively defines a plano-convex lens when in combination with the exterior lens surface 11c. Hence, the interior light receiving surface 11a of the lens unit 11 b defines the convex surface and the exterior lens surface 11c defines the planar surface. In this manner the lens 11 serves to gather the maximum amount of light from the interior of the chamber 10a and focus this in a forward direction.

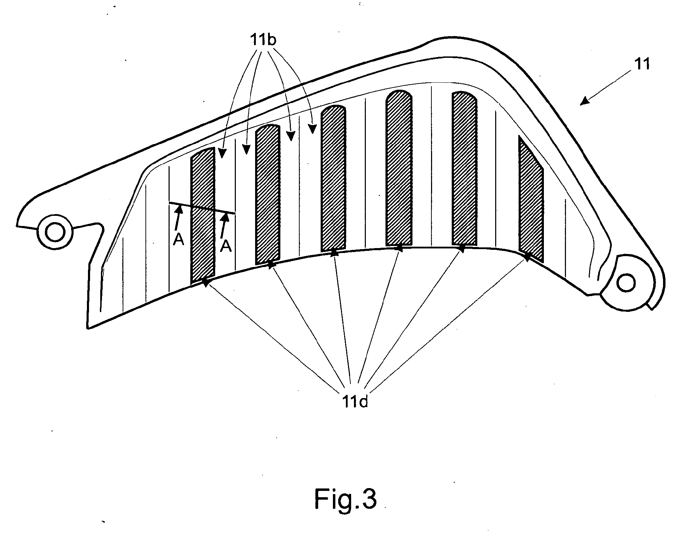

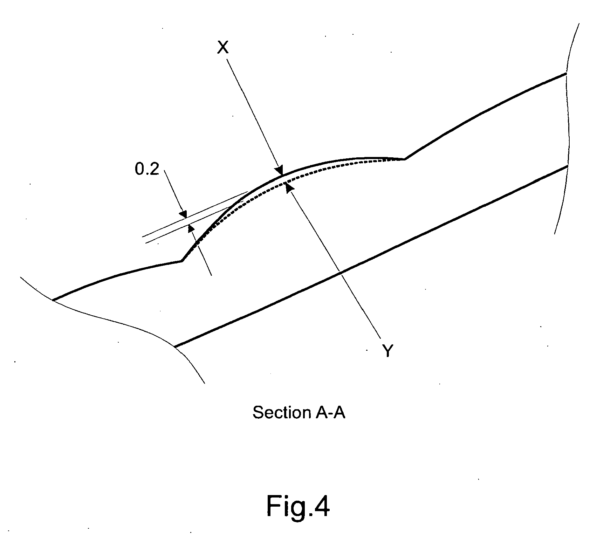

Referring to Figure 3, according to the invention the material of the lens 11 can incorporate a colourant compound or dye that renders the material of the lens coloured in appearance but still transparent to amber light emitted by the light source 20 when in use. To compensate for the reduction in light transmission in the lens material due to the presence of the dye, the light receiving surface 11a is modified so as to increase light gain from chamber 10a. Where the material used to make the lens 11 includes a blue dye (that is a compound that partially absorbs light from outside of the blue portion of the visible spectrum), the light receiving surface 11a is adapted by providing a plurality of modified lens units 11 d that have an increased level of curvature compared to the lens units 11 b. This increased level of curvature of the optical surface for the modified lens units 11d has the effect of creating an elliptically shaped lens surface when viewed in cross section (see Fig. 4). One effect of the modified curvature is that the modified lens units 11 d are astigmatic.

The distribution of the modified lens units 11d and the unmodified lens units 11c on the interior surface 11a is determined according to the colour of the material used to manufacture the lens 11. It has been found that when a blue colourant is included in the lens material, the optimum distribution of modified lens units 11d amongst the unmodified lens units 11 b is one in 3 (see Fig. 3). In such an arrangement the loss of light transmission due to the presence of the blue colourant in the lens material is substantially mitigated by the modified optical properties of the light receiving surface 11a. It will be appreciated that for colours other than blue an alternative optimum distribution of modified lens units 11 d amongst the unmodified lens units 11 b may be more appropriate.

Although particular embodiments of the invention have been disclosed herein in detail, this has been done by way of example and for the purposes of illustration only. The aforementioned embodiments are not intended to be limiting with respect to the scope of the appended claims, which follow. It is contemplated by the inventors that various substitutions, alterations, and modifications may be made to the invention without departing from the scope of the invention as defined by the claims.

## Claims

1. A coloured lens (11) for use in a vehicle directional indicator lamp, comprising:
a light receiving surface (11a) and an exterior surface (11c),
a plurality of lens units (11b), each lens unit (11b) defining a portion of the light receiving surface with a convex curvature such that each lens unit defines a plano-convex lens in combination with a corresponding region of the exterior surface (11c),
a plurality of modified lens units (11 d) distributed in a regular repeating pattern with the lens units (11b);
wherein one or more of the lens units is modified (11d) such that the convex curvature of the portion of the light receiving surface is greater than that of a neighbouring lens unit; and **characterised in that**
the lens material is blue in colour and the configuration of the distribution of modified and unmodified lens units (1b, 1d) is such that every third lens unit is a modified lens unit in order to ensure that colour of the lens does not affect the optical characteristics of the lamp.

2. A lens according to claim 1, wherein the lens units (11 b) are in the form of convex ribbed projections located on the light receiving surface (11a) of the lens.

3. A lens according to claim 1 or claim 2, wherein the configuration of the distribution of modified and unmodified lens units (11b,11d) is correlated to the light transmission characteristics of the lens material.

4. A vehicle directional indicator lamp assembly (10) comprising a lens (11) as described in any of claims 1 to 3.

5. A directional indicator lamp assembly (10) according to claim 4, wherein the directional indicator lamp assembly (10) is adapted for use as a forward facing directional indicator.

6. A directional indicator lamp assembly (10) according to claim 4, wherein the directional indicator lamp assembly (10) is adapted for use as a rearward facing directional indicator.

7. A motor vehicle comprising a vehicle directional indicator lamp assembly (10) as described in any of claims 4 to 6.

## Patentansprüche

1. Farbige Linse (11) für die Verwendung in einer Fahrzeugs-Richtungsanzeigelampe, die Folgendes umfasst:
eine Licht empfangende Fläche (11a) und eine Außenfläche (11c),
eine Vielzahl von Linseneinheiten (11b), wobei jede Linseneinheit (11b) einen Abschnitt der Licht empfangenden Fläche mit einer konvexen Krümmung definiert, so dass jede Linseneinheit eine planokonvexe Linse in Kombination mit einer entsprechenden Region der Außenfläche (11c) definiert,
eine Vielzahl von modifizierten Linseneinheiten (11d), die in einem regelmäßigen, sich wiederholenden Muster mit den Linseneinheiten (11b) verteilt sind;
wobei eine oder mehrere der Linseneinheiten so modifiziert (11d) ist, dass die konvexe Krümmung des Abschnitts der Licht empfangenden Oberfläche größer ist als die einer benachbarten Linseneinheit; und **dadurch gekennzeichnet, dass**
das Linsenmaterial eine blaue Farbe hat und die Konfiguration der Verteilung von modifizierten und nicht modifizierten Linseneinheiten (1b, 1d) derart ist, dass jede dritte Linseneinheit eine modifizierte Linseneinheit ist, um sicherzustellen, dass die Farbe der Linse die optischen Eigenschaften der Lampe nicht beeinflusst.

2. Linse nach Anspruch 1, wobei die Linseneinheiten (11b) die Form konvexer gerippter Erhebungen haben, die sich auf der Licht empfangenden Oberfläche (11a) der Linse befinden.

3. Linse nach Anspruch 1 oder Anspruch 2, wobei die Konfiguration der Verteilung von modifizierten und nicht modifizierten Linseneinheiten (11b, 11d) mit den Lichtdurchlässigkeitseigenschaften des Linsematerials korreliert.

4. Fahrzeug-Richtungsanzeigelampenbaugruppe (10), die eine Linse (11) nach einem der Ansprüche 1 bis 3 umfasst.

5. Richtungsanzeigelampenbaugruppe (10) nach Anspruch 4, wobei die Richtungsanzeigelampenbaugruppe (10) für die Verwendung als nach vorne weisende Richtungsanzeige angepasst ist.

6. Richtungsanzeigelampenbaugruppe (10) nach Anspruch 4, wobei die Richtungsanzeigelampenbaugruppe (10) für die Verwendung als nach hinten weisende Richtungsanzeige angepasst ist.

7. Kraftfahrzeug, das eine Fahrzeug-Richtungsanzeigelampenbaugruppe (10) nach einem der Ansprüche 4 bis 6 umfasst.

## Revendications

1. Lentille colorée (11) destinée à être utilisée dans une lampe de clignotant de véhicule, comprenant :
une surface réceptrice de lumière (11a) et une surface extérieure (11c),
une pluralité d'unités de lentille (11b), chaque unité de lentille (11b) définissant une partie de la surface réceptrice de lumière avec une courbe convexe de telle sorte que chaque unité de lentille définisse une lentille plan-convexe en combinaison avec une région correspondante de la surface extérieure (11c),
une pluralité d'unités de lentille modifiées (11d) réparties en un motif répété régulier avec les unités de lentille (11b);
dans laquelle une ou plusieurs des unités de lentille sont modifiées (11d) de telle sorte que la courbe convexe de la partie de la surface réceptrice de lumière soit supérieure à celle d'une unité de lentille voisine ; et **caractérisée en ce que**
la matière de lentille est de couleur bleue et la configuration de la répartition des unités de lentille modifiées et non modifiées (1b, 1d) est telle que chaque troisième unité de lentille est une unité de lentille modifiée afin de garantir que la couleur de la lentille n'affecte pas les caractéristiques optiques de la lampe.

2. Lentille selon la revendication 1, dans laquelle les unités de lentille (11b) ont la forme de projections nervurées convexes situées sur la surface réceptrice de lumière (11a) de la lentille.

3. Lentille selon la revendication 1 ou la revendication 2, dans laquelle la configuration de la répartition des unités de lentille modifiées et non modifiées (11b, 11d) est corrélée aux caractéristiques de transmission de lumière de la matière de lentille.

4. Ensemble de lampe de clignotant de véhicule (10) comprenant une lentille (11) selon l'une quelconque des revendications 1 à 3.

5. Ensemble de lampe de clignotant (10) selon la revendication 4, dans lequel l'ensemble de lampe de clignotant (10) est adapté pour être utilisé comme clignotant avant.

6. Ensemble de lampe de clignotant (10) selon la revendication 4, dans lequel l'ensemble de lampe de clignotant (10) est adapté pour être utilisé comme clignotant arrière.

7. Véhicule automobile comprenant un ensemble de lampe de clignotant de véhicule (10) selon l'une quelconque des revendications 4 à 6.
